# EUROPEAN PATENT SPECIFICATION

(11) **EP 4 276 696 B1**
(45) Date of publication and mention of the grant of the patent: **20.08.2025**
(21) Application number: 23172401.4
(22) Date of filing: 09.05.2023
(51) Int. Cl.: G06N 3/045, G06N 3/084, G06V 10/82, G06V 20/56

(54) **METHOD, DEVICE, AUTONOMOUS DRIVING SYSTEM AND STORAGE MEDIUM FOR MULTI-TASK TARGET DETECTION**
VERFAHREN, VORRICHTUNG, AUTONOMES FAHRSYSTEM UND SPEICHERMEDIUM ZUR MULTI-TASK-ZIELERKENNUNG
PROCÉDÉ, DISPOSITIF, SYSTÈME DE CONDUITE AUTONOME ET SUPPORT DE STOCKAGE POUR LA DÉTECTION MULTITÂCHE DE CIBLES

(30) Priority: 10.05.2022 CN 202210507817
(43) Date of publication of application: 15.11.2023
(73) Proprietor: Anhui NIO Autonomous Driving Technology Co., Ltd., Hefei, Anhui 230601 (CN)
(72) Inventor: CHEN, Jin, Shanghai, 201805 (CN)
(74) Representative: Vossius & Partner Patentanwälte Rechtsanwälte mbB

(56) References cited:
- EP-A1- 3 916 628
- DE-A1- 102023 117 244
- ANONYMOUS: "Transfer learning and fine-tuning", 27 April 2022 (2022-04-27), pages 1 - 12, XP093082822, Retrieved from the Internet <URL:https://web.archive.org/web/20220427214856/https://www.tensorflow.org/tutorials/images/transfer_learning> [retrieved on 20230918]

## Description

### Technical Field

The disclosure relates to the technical field of artificial neural networks, and specifically provides a multi-task target detection method and device, an autonomous driving system, and a storage medium.

### Background Art

As one of the basic objectives in the field of computer vision, multi-task target detection has broad application prospects. Recognition and detection of multiple task targets need to be involved in a perception scenario of autonomous driving. If a single-task learning model is used for each task target, the superimposed delay and computing resources, and difficulty in deployment are unbearable. A multi-task learning model enables the use of a same one backbone network to extract depth features. Each task is connected to one head network after the depth features output by the backbone network, which effectively solves the problem with the computing resources and reduces the delay.

European patent application EP 3 916 628 A1 relates to the field of artificial intelligence, and specifically, to the field of computer vision, and discloses a perception network based on a plurality of headers. The perception network includes a backbone and the plurality of parallel headers. The plurality of parallel headers are connected to the backbone. The backbone is configured to receive an input image, perform convolution processing on the input image, and output feature maps, corresponding to the image, that have different resolutions. Each of the plurality of parallel headers is configured to detect a task object in a task based on the feature maps output by the backbone, and output a 2D box of a region in which the task object is located and confidence corresponding to each 2D box. Each parallel header detects a different task object. The task object is an object that needs to be detected in the task. Higher confidence indicates a higher probability that the task object corresponding to the task exists in the 2D box corresponding to the confidence.

However, during practical implementation of autonomous driving perception, due to data costs, most of multi-task data sets are multi-source data sets, that is, each data sample has only one task annotation, and there is a great difference in distributions of data from different tasks; in addition, quite unlike a current multi-task learning method explored in the public domain that uses a uni-source data set and has a few number of tasks, there are generally a large number of tasks, which results in a high possibility of occurrence of task conflicts, a low convergence speed, and a poor model training effect during training of the multi-task model using multi-source data, thus affecting the reliability of multi-task target detection.

### Summary of the Disclosure

To overcome the above advantages, the disclosure is proposed to provide a multi-task target detection method and device, an autonomous driving system, and a storage medium, in order to solve or at least partially solve the technical problems that the reliability of multi-task target detection is affected due to a high possibility of occurrence of task conflicts between multi-source data, a low convergence speed, and a poor model training effect.

The invention is set out in the independent claims.

In a first aspect, the disclosure provides a multi-task target detection method, including:
obtaining an image under detection that contains at least one target detection object; and
inputting the image under detection into a multi-task target detection model trained based on a step-by-step method, and detecting and recognizing the target detection object,
wherein the multi-task target detection model is obtained by step-by-step training of a pre-built model to be trained; the model to be trained comprises a main backbone network shared by all tasks, a plurality of branch backbone networks respectively used for different task groups, and a head network individually used for each task; and the step-by-step training of a pre-built model to be trained comprises:
   selecting traffic scenario training images corresponding to some of tasks in each task group to perform first-stage training on the model to be trained, to obtain an initial trained model;
   fixing parameters of the main backbone network in the initial trained model, and performing second-stage training on the initial trained model by using traffic scenario training images corresponding to all tasks in each task group, to obtain an intermediate trained model; and
   releasing parameters of the main backbone network in the intermediate trained model, and performing third-stage training on the intermediate trained model by using traffic scenario training images corresponding to all tasks in all task groups, to obtain the multi-task target detection model.

Further, in the above multi-task target detection method, performing third-stage training on the intermediate trained model by using traffic scenario training images corresponding to all tasks in all task groups, to obtain the multi-task target detection model includes:
obtaining a learning rate during second-stage training;
adjusting the learning rate during the second-stage training based on a preset learning rate reduction parameter, to obtain a reduced learning rate; and
performing, based on the reduced learning rate, third-stage training on the intermediate trained model by using traffic scenario training images corresponding to all tasks in all the task groups, to obtain the multi-task target detection model.
Further, in the above multi-task target detection method, each of the branch backbone networks is connected to the main backbone network and a head network for each task in a corresponding task group, respectively, to form a network path corresponding to each task; and
in at least one training stage that comprises the first-stage training, the second-stage training, and the third-stage training, training is performed according to the following steps:
   performing forward training and backward training on corresponding network paths based on traffic scenario training images corresponding to a plurality of tasks in a current training stage, respectively, to obtain a gradient of the main backbone network, a gradient of a corresponding branch backbone network, and a gradient of a head network on each network path; and
   updating parameters of a model in the current training stage based on the gradient of the main backbone network, the gradient of the corresponding branch backbone network, and the gradient of the head network on each network path until convergence conditions are met, and then obtaining a trained model in the current training stage.

Further, in the above multi-task target detection method, the convergence conditions include:
there being not any decrease in a loss of each network path, and there being not any increase in an accuracy of a test result after the model in the current training stage is tested using a traffic scenario training image corresponding to a validation set.

Further, in the above multi-task target detection method, performing forward training and backward training on corresponding network paths based on traffic scenario training images corresponding to tasks in a current training stage, to obtain a gradient of the main backbone network, a gradient of a corresponding branch backbone network, and a gradient of a head network on each network path includes:
performing, based on a forward propagation algorithm, the forward training on corresponding network paths by using traffic scenario training images corresponding to the tasks in the current training stage, to obtain a loss of each network path; and
performing, based on a backward propagation algorithm, the backward training on corresponding network paths by using the losses, to determine the gradient of the main backbone network, the gradient of the corresponding branch backbone network, and the gradient of the head network on each network path.

Further, in the above multi-task target detection method, updating parameters of a model in the current training stage based on the gradient of the main backbone network, the gradient of the corresponding branch backbone network, and the gradient of the head network on each network path includes:
superimposing gradients of the main backbone network on all network paths to obtain a superimposed gradient of the main backbone network, and superimposing gradients of all branch backbone networks on all network paths corresponding to the branch backbone networks to obtain a superimposed gradient of all the branch backbone networks; and
updating parameters of the main backbone network based on the superimposed gradient of the main backbone network, updating parameters of each main backbone network based on the superimposed gradient of all the branch backbone networks, and updating parameters of each head network based on the gradient of the head network on each network path.

Further, in the above multi-task target detection method, selecting traffic scenario training images corresponding to some of tasks in each task group to perform first-stage training on the model to be trained, to obtain an initial trained model includes:
selecting a traffic scenario training image corresponding to a task with a maximum volume of data in each task group to perform first-stage training on the model to be trained, to obtain the initial trained model.

In a third aspect, there is provided a multi-task target detection device, including a processor and a store adapted to store a plurality of program codes, where the program codes are adapted to be loaded and run by the processor to perform the multi-task target detection method in any one of the above aspects.

In a fourth aspect, there is provided an autonomous driving system, including the multi-task target detection device as described above.

In a fifth aspect, there is provided a computer-readable storage medium having a plurality of program codes stored therein, where the program codes are adapted to be loaded and run by a processor to perform the multi-task target detection method in any one of the above technical solutions.

The above one or more technical solutions of the disclosure have at least one or more of the following beneficial effects:
In the technical solutions for implementing the disclosure, the model to be trained is designed as a structure that the main backbone network shared by all the tasks, the branch backbone networks shared by different task groups, and the head network individually used for each task are connected in sequence. During model training, the traffic scenario training images corresponding to some of the tasks in each task group are selected to perform the first-stage training on the model to be trained, to obtain the initial trained model; the parameters of the main backbone network in the initial trained model are fixed, and the second-stage training is performed on the initial trained model by using the traffic scenario training images corresponding to all the tasks in each task group, to obtain the intermediate trained model; and then, the parameters of the main backbone network in the intermediate trained model are released, and the third-stage training is performed on the intermediate trained model by using the traffic scenario training images corresponding to all the tasks in all the task groups, to finally obtain the multi-task target detection model. In this way, during the first-stage training, only some of the tasks in each group are used for training, which reduces the volume of data, effectively prevents the occurrence of task conflicts, increases the convergence speed, and shortens the training time; during the second-stage training, with the parameters of the main backbone network unchanged, the tasks on the path for the branch backbone networks after the main backbone network may be used for separate training without mutual interference, which optimizes the parameters of the head network, shortens the training time, and makes it also possible to use tasks from a multi-source data set for training without mutual interference, regardless of whether tasks derive from a uni-source data set; and during the third-stage training, the model in the first two stages is already in a convergence state, and therefore, the use of all the tasks for simultaneous training in this case cannot only further optimize the parameters of the main backbone network, and can also implement quick convergence to obtain the required multi-task target detection model. As a result, the occurrence of task conflicts can be reduced, the convergence speed can be increased, the model training effect can be improved, and a higher reliability can be finally achieved by inputting the image under detection into the multi-task target detection model trained based on the step-by-step method, and detecting and recognizing the target detection object.

Further, during the first-stage training, the task with the maximum volume of data in each task group is selected for training, which can avoid the problem of difficulty in convergence of tasks with a small volume of data due to simultaneous training of all the tasks.

### Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In addition, similar components are represented by similar numbers in the figures, in which:
FIG. 1 is a schematic flowchart of main steps of a multi-task target detection method according to an embodiment of the disclosure;
FIG. 2 is a structural block diagram of a model to be trained according to an embodiment of the disclosure;
FIG. 3 is a schematic flowchart of main steps of a method for training a multi-task target detection model according to an embodiment of the disclosure; and
FIG. 4 is a block diagram of a main structure of a multi-task target detection device according to an embodiment of the disclosure.

### Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, or may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that may store program codes, for example, a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "a/an" and "this" in the singular form may also include the plural form.

In a multi-task target detection process, due to data costs, most of multi-task data sets are multi-source data sets, that is, each data sample has an annotation for only one task, and there is a great difference in distributions of data from different tasks; in addition, quite unlike a current multi-task learning method explored in the public domain that uses a uni-source data set and has a few number of tasks, there are generally a large number of tasks, which results in a high possibility of occurrence of task conflicts, a low convergence speed, and a poor model training effect during training of the multi-task model using multi-source data, thus affecting the reliability of multi-task target detection.

In view of this, the disclosure provides the following technical solutions in order to solve the above technical problems.

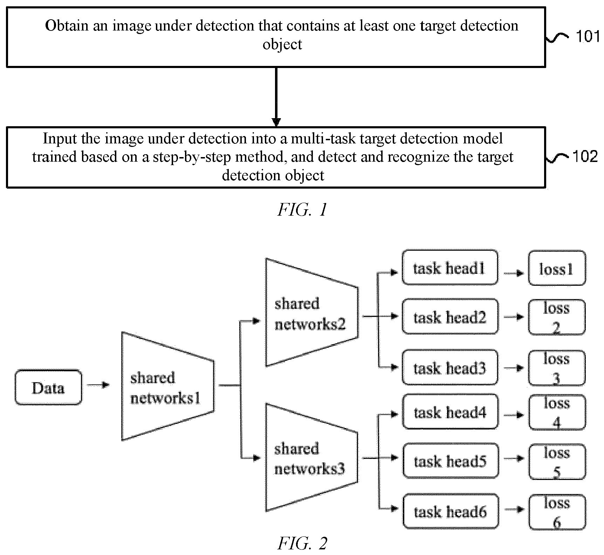

Referring to FIG. 1, FIG. 1 is a schematic flowchart of main steps of a multi-task target detection method according to an embodiment of the disclosure. FIG. 2 is a structural block diagram of a model to be trained according to an embodiment of the disclosure. As shown in FIG. 2, the model to be trained may include a main backbone network shared by all tasks, a plurality of branch backbone networks respectively used for different task groups, and a head network individually used for each task, where each of the branch backbone networks is connected to the main backbone network and the head network for each task in a corresponding task group, respectively, to form a network path corresponding to each task. Each branch backbone network may be divided according to characteristics of each task. For example, the characteristics of the tasks may include semantic segmentation, target detection, etc.

In FIG. 2, for example, two branch backbone networks are included, and each branch backbone network is connected to head networks for three different tasks. The main backbone network can be denoted as shared networks 1, the two branch backbone networks can be respectively denoted as shared networks2 and shared networks3, and the head networks corresponding to six tasks can be denoted as task head1 to task head6 in sequence. The first branch backbone network shared networks2 is connected to the first head network task head 1 till the third head network task head3, the second branch backbone network shared networks3 is connected to the first head network task head4 till the third head network task head6, and the main backbone network shared networks1 is connected to input data Data. Shared networks1-shared networks2-task head1 is the first network path, and may correspond to a loss function denoted as loss1. Shared networks 1-shared networks2-task head2 is the second network path, and may correspond to a loss function denoted as loss2, and so on. Examples will not be given herein.

As shown in FIG. 1, the multi-task target detection method in the embodiment of the disclosure mainly includes steps 101 and 102 below.

In step 101, an image under detection that contains at least one target detection object is obtained.

In a specific implementation process, the target detection object may include, but is not limited to, an obstacle, a pedestrian, a traffic light, and a lane line. The image under detection that contains the target detection object may be obtained by a vehicle-mounted camera, a millimeter wave radar, etc.

In step 102, the image under detection is input into a multi-task target detection model trained based on a step-by-step method, and the target detection object is detected and recognized.

In a specific implementation process, after the image under detection is input into the multi-task target detection model trained based on the step-by-step method, the multi-task target detection model first divides the image under detection according to characteristics of a task corresponding to the image under detection, and then sequentially inputs divided images under detection into corresponding network paths for detection and recognition, so as to obtain the target detection object.

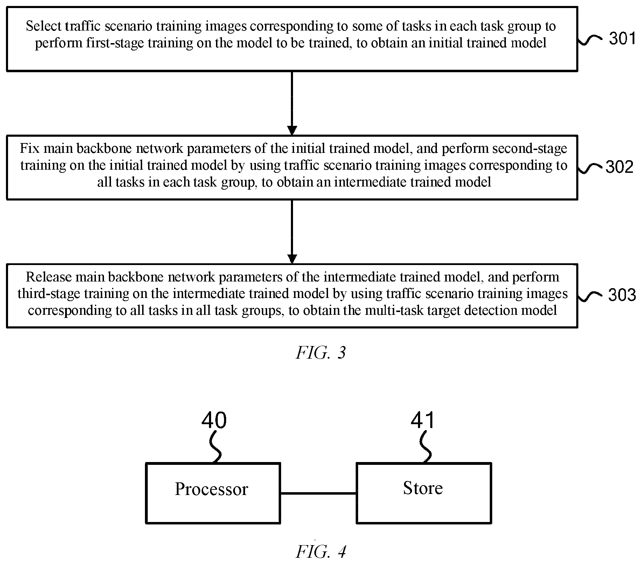

Step-by-step training is performed on a pre-built model to be trained to implement training of the multi-task target detection model. The specific training process is as shown in FIG. 3. FIG. 3 is a schematic flowchart of main steps of a method for training a multi-task target detection model according to an embodiment of the disclosure. As shown in FIG. 3, the method for training a multi-task target detection model in this embodiment mainly includes steps 301 to 303.

In step 301, traffic scenario training images corresponding to some of tasks in each task group are selected to perform first-stage training on the model to be trained, to obtain an initial trained model.

Different tasks in each task group correspond to different volumes of data of traffic scenario training images, and when all the tasks are used for simultaneous training, tasks with a smaller volume of data are hardly to converge, and the use of a resampling method for the tasks with a smaller volume of data may lead to slow convergence in training and a significant increase in the training time. Therefore, only the traffic scenario training images corresponding to some of the tasks in each task group are selected to perform the first-stage training on the model to be trained, such that parameters of the main backbone network in the model to be trained, parameters of the branch backbone network in the model to be trained, and parameters of the head network corresponding to the tasks for training in the model to be trained are updated to obtain the initial trained model.

In a specific implementation process, a traffic scenario training image corresponding to a task with a maximum volume of data in each task group may be selected to perform the first-stage training on the model to be trained, to obtain the initial trained model. As such, the traffic scenario training images corresponding to the tasks with a small volume of data are no longer used to train the model to be trained, thus preventing the problem of a longer training time caused by the difficulty in convergence of the tasks with a small volume of data; in addition, when the task with the maximum volume of data is used for training, the task with a large volume of data requires no resampling, and achieves a more accurate training result as compared to the tasks with a small volume of data.

During the first-stage training, the training may be performed according to the following steps.
(1) Forward training and backward training are performed on corresponding network paths based on traffic scenario training images corresponding to a plurality of tasks in a current training stage, respectively, to obtain a gradient of the main backbone network, a gradient of a corresponding branch backbone network, and a gradient of a head network on each network path.

Specifically, based on a forward propagation algorithm, the forward training may be performed on corresponding network paths by using traffic scenario training images corresponding to the tasks in the current training stage, to obtain a loss of each network path; and based on a backward propagation algorithm, the backward training may be performed on corresponding network paths by using the losses, to determine the gradient of the main backbone network, the gradient of the corresponding branch backbone network, and the gradient of the head network on each network path.

(2) Parameters of a model in the current training stage are updated based on the gradient of the main backbone network, the gradient of the corresponding branch backbone network, and the gradient of the head network on each network path until convergence conditions are met, and then a trained model in the current training stage is obtained.

Specifically, gradients of the main backbone network on all network paths may be superimposed to obtain a superimposed gradient of the main backbone network, and gradients of all branch backbone networks on all network paths corresponding to the branch backbone networks may be superimposed to obtain a superimposed gradient of all the branch backbone networks; and the parameters of the main backbone network may be updated based on the superimposed gradient of the main backbone network, parameters of each main backbone network may be updated based on the superimposed gradient of all the branch backbone networks, and parameters of each head network may be updated based on the gradient of the head network on each network path.

It should be noted that after one instance of iterative training is completed, the next iterative training is directly carried out; and after a certain number of instances of training, a test on a validation set is conducted to check the accuracy of a model in the current training stage, and the training may not stop until
there is not any decrease in a loss of each network path, and there is not any increase in an accuracy of a test result after the model in the current training stage is tested using a traffic scenario training image corresponding to the validation set.

In step 302, parameters of the main backbone network in the initial trained model are fixed, and second-stage training is performed on the initial trained model by using traffic scenario training images corresponding to all tasks in each task group, to obtain an intermediate trained model.

During the first-stage training, only the traffic scenario training images corresponding to some of the tasks participate in model training, and consequently, the parameters of the main backbone network in the initial trained model, the parameters of the branch main backbone network in the initial trained model, and parameters of each head network in the initial trained model are not optimal parameters, and the branch network corresponding to each task group is not obtained by all the tasks in the task group. Therefore, the second-stage training is required after the initial trained model is obtained.

In a specific implementation process, a main backbone network is used by all the tasks, the main backbone network for the model to be trained has been updated through the first training stage, and a certain training effect has been achieved. Therefore, to shorten the training time, the parameters of the main backbone network in the initial trained model are fixed to remain unchanged, second-stage training may be performed on the initial trained model by using the traffic scenario training images corresponding to all the tasks in each task group, and the parameters of the branch backbone network in the initial trained model and parameters of all the head networks in the initial trained model may be respectively updated to obtain the intermediate trained model.

In a specific implementation process, the second-stage training process can be performed with reference to the first-stage training process, and will not be repeated herein.

It should be noted that during the second-stage training, the parameters of the main backbone network in the initial trained model are fixed, such that even if the gradient of the main backbone network on each network path is obtained, the parameters of the main backbone network in the initial trained model will not be affected. As such, the branch main backbone network on each network path and the head network connected to the branch main backbone network may be used for simultaneous training on respective different processors, which shortens the training time, and makes it also possible to use tasks from a multi-source data set for training without mutual interference, regardless of whether tasks derive from a uni-source data set.

In step 303, the parameters of the main backbone network in the intermediate trained model are released, and third-stage training is performed on the intermediate trained model by using traffic scenario training images corresponding to all tasks in all task groups, to obtain the multi-task target detection model.

During the first-stage training and the second-stage training, only some of the tasks participate in training of the parameters of the main backbone network, and consequently, the parameters of the main backbone network are not optimal parameters. Therefore, after the intermediate trained model is obtained, the parameters of the main backbone network in the intermediate trained model are released, and then third-stage training is performed on the intermediate trained model by using traffic scenario training images corresponding to all tasks in all the task groups, to further update the parameters of the main backbone network in the intermediate trained model, parameters of the branch backbone networks in the intermediate trained model, and parameters of the head networks corresponding to all tasks in the intermediate trained model, so as to obtain the multi-task target detection model.

In a specific implementation process, the third-stage training process can also be performed with reference to the first-stage training process, and will not be repeated herein.

It should be noted that the parameters of the main backbone network have been initially optimized through the first-stage training, and the parameters of the branch backbone networks and the parameters of the head networks corresponding to all the tasks are further optimized through the second-stage training, that is, the third-stage training is performed with convergence implemented in the first-stage training and the second-stage training. Therefore, all the tasks can implement quick convergence even if they are used for simultaneous training, and the parameters of the main backbone network in the multi-task target detection model are related to all the tasks and have a higher accuracy.

In addition, the parameters of the main backbone network have been initially optimized through the first-stage training, and therefore, this step may be completed at a low learning rate, to shorten the entire training time.

Specifically, a learning rate during second-stage training may be obtained; the learning rate during the second-stage training may be adjusted based on a preset learning rate reduction parameter, to obtain a reduced learning rate; and based on the reduced learning rate, third-stage training may be performed on the intermediate trained model by using all tasks in all the task groups, to obtain the multi-task target detection model. Usually, the preset learning rate reduction parameter may be adjusted by 1/10 of the learning rate in the previous training stage.

According to the multi-task target detection method in this embodiment, the model to be trained is designed as a structure that the main backbone network shared by all the tasks, the branch backbone networks shared by different task groups, and the head network individually used for each task are connected in sequence. During model training, the traffic scenario training images corresponding to some of the tasks in each task group are selected to perform the first-stage training on the model to be trained, to obtain the initial trained model; the parameters of the main backbone network in the initial trained model are fixed, and the second-stage training is performed on the initial trained model by using the traffic scenario training images corresponding to all the tasks in each task group, to obtain the intermediate trained model; and then, the parameters of the main backbone network in the intermediate trained model are released, and the third-stage training is performed on the intermediate trained model by using the traffic scenario training images corresponding to all the tasks in all the task groups, to finally obtain the multi-task target detection model. In this way, during the first-stage training, only some of the tasks in each group are used for training, which reduces the volume of data, effectively prevents the occurrence of task conflicts, increases the convergence speed, and shortens the training time; during the second-stage training, with the parameters of the main backbone network unchanged, the tasks on the path for the branch backbone networks after the main backbone network may be used for separate training without mutual interference, which optimizes the parameters of the head network, shortens the training time, and makes it also possible to use tasks from a multi-source data set for training without mutual interference, regardless of whether tasks derive from a uni-source data set; and during the third-stage training, the model in the first two stages is already in a convergence state, and therefore, the use of all the tasks for simultaneous training in this case cannot only further optimize the parameters of the main backbone network, and can also implement quick convergence to obtain the required multi-task target detection model. As a result, the occurrence of task conflicts can be reduced, the convergence speed can be increased, the model training effect can be improved, and a higher reliability can be finally achieved by inputting the image under detection into the multi-task target detection model trained based on the step-by-step method, and detecting and recognizing the target detection object.

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the disclosure.

Those skilled in the art can understand that all or some of the procedures in the method of the above embodiment of the disclosure may also be implemented by a computer program instructing relevant hardware. The computer program may be stored in a computer-readable storage medium, and when the computer program is executed by a processor, the steps of the above method embodiments may be implemented. The computer program includes computer program codes, which may be in a source code form, an object code form, an executable file form, some intermediate forms, or the like. The computer-readable storage medium may include: any entity or apparatus that can carry the computer program code, such as a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides a multi-task target detection device.

FIG. 4 is a block diagram of a main structure of a multi-task target detection device according to an embodiment of the disclosure. As shown in FIG. 4, in an embodiment of a control apparatus according to the disclosure, the multi-task target detection device includes a processor 40 and a store 41. The store 41 may be configured to store a program for executing the multi-task target detection method according to the above method embodiment. The processor 40 may be configured to execute a program in the store 41, where the program includes, but is not limited to, a program for executing a control method for a smart home device according to the above method embodiment. For ease of description, only parts related to the embodiments of the disclosure are shown. For specific technical details that are not disclosed, reference may be made to the method part of the embodiments of the disclosure. The multi-task target detection device may be a control device formed by various electronic devices.

Further, the disclosure further provides an autonomous driving system, which may include the multi-task target detection device according to the above embodiments.

Further, the disclosure further provides a computer-readable storage medium. In an embodiment of the computer-readable storage medium according to the disclosure, the computer-readable storage medium may be configured to store a program for executing the multi-task target detection method according to the above method embodiment, where the program may be loaded and run by a processor to implement the above multi-task target detection method. For ease of description, only parts related to the embodiments of the disclosure are shown. For specific technical details that are not disclosed, reference may be made to the method part of the embodiments of the disclosure. The computer-readable storage medium may be a storage apparatus formed by various electronic devices. Optionally, the computer-readable storage medium in the embodiment of the disclosure is a non-transitory computer-readable storage medium.

Further, it should be understood that, because the configuration of modules is merely intended to illustrate function units of the apparatus in the disclosure, physical devices corresponding to these modules may be a processor itself, or part of software, part of hardware, or part of a combination of software and hardware in the processor. Therefore, the number of modules in the figure is merely an example.

Those skilled in the art can understand that the modules in the apparatus may be adaptively split or merged. Such a split or combination of specific modules does not cause the technical solutions to depart from the principle of the disclosure. Therefore, technical solutions after any such split or combination shall all fall within the scope of protection of the disclosure.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art may make equivalent changes or substitutions to the related technical features without departing from the principle of the disclosure, and all the technical solutions with such changes or substitutions shall fall within the scope of protection of the disclosure.

## Claims

1. A computer-implemented method for multi-task target detection, comprising:
obtaining a detection image that depicts at least one target detection object (101); and
inputting the detection image into a multi-task target detection model trained based on a step-by-step method, and detecting and identifying the target detection object (102),
wherein the multi-task target detection model is obtained by step-by-step training of a pre-built model; the pre-built model comprises a main backbone network shared among a plurality of tasks, a plurality of branch backbone networks respectively used for each of a plurality of task groups, and a plurality of head networks respectively used for each task; and the step-by-step training of the pre-built model comprises:
performing first-stage training on the pre-built model by using traffic scenario training images corresponding to a non-empty proper subset of tasks in each task group, thereby obtaining an initial trained model (301);
freezing parameters of the main backbone network in the initial trained model, and performing second-stage training on the initial trained model by using traffic scenario training images corresponding to all tasks in each task group, thereby obtaining an intermediate trained model (302); and
unfreezing parameters of the main backbone network in the intermediate trained model, and performing third-stage training on the intermediate trained model by using traffic scenario training images corresponding to all tasks in all task groups, thereby obtaining the multi-task target detection model (303);
wherein different tasks in each task group correspond to different volumes of data of traffic scenario training images.

2. The method according to claim 1, wherein performing third-stage training on the intermediate trained model by using traffic scenario training images corresponding to all tasks in all task groups, thereby obtaining the multi-task target detection model comprises:
obtaining a learning rate during the second-stage training;
adjusting the learning rate during the second-stage training based on a preset learning rate reduction parameter, thereby obtaining a reduced learning rate; and
performing the third-stage training based on the reduced learning rate on the intermediate trained model by using traffic scenario training images corresponding to all tasks in all the task groups, thereby obtaining the multi-task target detection model.

3. The method according to claim 1 or 2, wherein each of the branch backbone networks is connected to the main backbone network and the head network for each task in a corresponding task group, thereby forming a plurality of network paths respectively corresponding to each task; and
at least one of performing the first-stage training, performing the second-stage training and performing the third-stage training comprises:
performing forward training and backward training on network paths by using traffic scenario training images corresponding to a plurality of tasks in a current training stage, respectively, thereby obtaining a gradient of the main backbone network on each network path, a gradient of a branch backbone network on each network path, and a gradient of a head network on each network path; and
updating parameters of the corresponding model based on the gradient of the main backbone network on each network path, the gradient of the branch backbone network on each network path, and the gradient of the head network on each network path until convergence conditions are met, and then obtaining the corresponding trained model.

4. The method according to claim 3, wherein the convergence conditions comprise:
there being not any decrease in a loss of each network path, and there being not any increase in an accuracy of a validation result after the corresponding model is validated by using a traffic scenario validation image.

5. The method according to claim 3 or 4, wherein performing forward training and backward training on network paths by using traffic scenario training images corresponding to a plurality of tasks in a current training stage, thereby obtaining a gradient of the main backbone network on each network path, a gradient of a branch backbone network on each network path, and a gradient of a head network on each network path comprises:
performing, based on a forward propagation algorithm, the forward training on corresponding network paths by using traffic scenario training images corresponding to the tasks in the current training stage, thereby obtaining a loss value of each network path; and
performing, based on a backward propagation algorithm, the backward training on corresponding network paths by using the obtained loss value, thereby obtaining the gradient of the main backbone network on each network path, the gradient of the branch backbone network on each network path, and the gradient of the head network on each network path.

6. The method according to any one of claims 3 to 5, wherein updating parameters of the corresponding model based on the gradient of the main backbone network on each network path, the gradient of the branch backbone network on each network path, and the gradient of the head network on each network path comprises:
superimposing gradients of the main backbone network on all network paths thereby obtaining a superimposed gradient of the main backbone network, and superimposing gradients of each branch backbone network on all network paths corresponding to the branch backbone network thereby obtaining a superimposed gradient of each branch backbone network; and
updating parameters of the main backbone network based on the superimposed gradient of the main backbone network, updating parameters of each main backbone network based on the superimposed gradient of each branch backbone network, and updating parameters of each head network based on the gradient of the head network on each network path.

7. The method according to any one of claims 1 to 6, wherein selecting traffic scenario training images corresponding to a non-empty proper subset of tasks in each task group to perform first-stage training on the pre-built model, thereby obtaining an initial trained model comprises:
performing first-stage training on the pre-built model by using a traffic scenario training image corresponding to a task with a maximum volume of data in each task group, thereby obtaining the initial trained model.

8. A device for multi-task target detection, comprising at least one processor and a storage adapted to store a plurality of program codes, wherein the program codes are adapted to be loaded and executed by the at least one processor to perform a method for multi-task target detection according to any one of claims 1 to 7.

9. An autonomous driving system, comprising a device for multi-task target detection device according to claim 8.

10. A non-transitory computer-readable storage medium having a plurality of program codes stored thereon that, when executed by at least one processor, cause the at least one processor to perform a method for multi-task target detection according to any one of claims 1 to 7.

## Patentansprüche

1. Computerimplementiertes Verfahren zur Multitask-Zielerkennung, Folgendes umfassend:
Erzielen eines Erkennungsbildes, das mindestens ein Zielerkennungsobjekt (101) abbildet, und
Eingeben des Erkennungsbildes in ein Modell zur Multitask-Zielerkennung, das basierend auf einem schrittweisen Verfahren trainiert wird, und Erkennen und Identifizieren des Zielerkennungsobjekts (102),
wobei das Modell zur Multitask-Zielerkennung durch schrittweises Trainieren eines vorgefertigten Modells erzielt wird, das vorgefertigte Modell ein Haupt-Backbone-Netzwerk umfasst, das für mehrere Aufgaben gemeinsam genutzt wird, mehrere Zweig-Backbone-Netzwerke entsprechend für jede von mehreren Aufgabengruppen verwendet werden und mehrere Head-Netzwerke entsprechend für jede Aufgabe verwendet werden und das schrittweise Trainieren des vorgefertigten Modells Folgendes umfasst:
Durchführen einer ersten Trainingsstufe an dem vorgefertigten Modell unter Verwendung von Trainingsbildern von Verkehrsszenarien, die einer nicht leeren echten Teilmenge von Aufgaben in jeder Aufgabengruppe entsprechend, wodurch ein anfängliches trainiertes Modell erzielt wird (301),
Festschreiben von Parametern des Haupt-Backbone-Netzwerks in dem anfänglichen trainierten Modell und Durchführen einer zweiten Trainingsstufe an dem anfänglichen trainierten Modell unter Verwendung von Trainingsbildern von Verkehrsszenarien, die allen Aufgaben in jeder Aufgabengruppe entsprechen, wodurch ein trainiertes Zwischenmodell erzielt wird (302), und
Freigeben von Parametern des Haupt-Backbone-Netzwerks in dem trainierten Zwischenmodell und Durchführen einer dritten Trainingsstufe an dem trainierten Zwischenmodell unter Verwendung von Trainingsbildern von Verkehrsszenarien, die allen Aufgaben in allen Aufgabengruppen entsprechen, wodurch das Modell zur Multitask-Zielerkennung erzielt wird (303),
wobei unterschiedliche Aufgaben in jeder Aufgabengruppe unterschiedlichen Datenvolumen von Trainingsbildern von Verkehrsszenarien entsprechen.

2. Verfahren nach Anspruch 1, wobei das Durchführen der dritten Trainingsstufe an dem trainierten Zwischenmodell unter Verwendung von Trainingsbildern von Verkehrsszenarien, die allen Aufgaben in allen Aufgabengruppen entsprechen, wodurch das Modell zur Multitask-Zielerkennung erzielt wird, Folgendes umfasst:
Erzielen eines Lerntempos während der zweiten Trainingsstufe,
Justieren des Lerntempos während der zweiten Trainingsstufte, basierend auf einem voreingestellten Parameter zur Lerntemporeduzierung, wodurch ein reduziertes Lerntempo erzielt wird, und
Durchführen der dritten Trainingsstufe basierend auf dem reduzierten Lerntempo an dem trainierten Zwischenmodell unter Verwendung von Trainingsbildern von Verkehrsszenarien, die allen Aufgaben in allen Aufgabengruppen entsprechen, wodurch das Modell zur Multitask-Zielerkennung erzielt wird.

3. Verfahren nach Anspruch 1 oder 2, wobei jedes der Zweig-Backbone-Netzwerke für jede Aufgabe in einer entsprechenden Aufgabengruppe mit dem Haupt-Backbone-Netzwerk und dem Head-Netzwerk verbunden wird, wodurch mehrere Netzwerkpfade gebildet werden, die jeweils einer der Aufgaben entsprechen, und
mindestens eines des Durchführens der ersten Trainingsstufe, des Durchführens der zweiten Trainingsstufe und des Durchführens der dritten Trainingsstufe Folgendes umfasst:
Durchführen eines Vorwärtstrainings und eines Rückwärtstrainings auf Netzwerkpfaden unter Verwendung von Trainingsbildern von Verkehrsszenarien, die jeweils mehreren Aufgaben in einer aktuellen Trainingsstufe entsprechen, wodurch auf jedem Netzwerkpfad ein Gradient des Haupt-Backbone-Netzwerks, auf jedem Netzwerkpfad ein Gradient eines Zweig-Backbone-Netzwerks und auf jedem Netzwerkpfad ein Gradient eines Head-Netzwerks erzielt wird, und
Aktualisieren von Parametern des entsprechenden Modells, basierend auf dem Gradienten des Haupt-Backbone-Netzwerks auf jedem Netzwerkpfad, dem Gradienten des Zweig-Backbone-Netzwerks auf jedem Netzwerkpfad und dem Gradienten des Head-Netzwerks auf jedem Netzwerkpfad, bis Konvergenzbedingungen erfüllt sind, und dann Erzielen des entsprechenden trainierten Modells.

4. Verfahren nach Anspruch 3, wobei die Konvergenzbedingungen Folgendes umfassen:
es ist keinerlei Rückgang bei einem Verlust jedes Netzwerkpfades vorhanden und es ist keine Zunahme bei einer Genauigkeit eines Validierungsergebnisses vorhanden, nachdem das entsprechende Modell unter Verwendung eines Validierungsbildes von Verkehrsszenarien überprüft wurde.

5. Verfahren nach Anspruch 3 oder 4, wobei das Durchführen eines Vorwärtstrainings und eines Rückwärtstrainings auf Netzwerkpfaden unter Verwendung von Trainingsbildern von Verkehrsszenarien, die jeweils mehreren Aufgaben in einer aktuellen Trainingsstufe entsprechen, wodurch auf jedem Netzwerkpfad ein Gradient des Haupt-Backbone-Netzwerks, auf jedem Netzwerkpfad ein Gradient eines Zweig-Backbone-Netzwerks und auf jedem Netzwerkpfad ein Gradient eines Head-Netzwerks erzielt wird, Folgendes umfasst:
Durchführen des Vorwärtstrainings auf entsprechenden Netzwerkpfaden unter Verwendung von Trainingsbildern von Verkehrsszenarien, die den Aufgaben in der aktuellen Trainingsstufe entsprechen, basierend auf einem Vorwärtspropagierungsalgorithmus, wodurch ein Verlustwert jedes Netzwerkpfades erzielt wird, und
Durchführen des Rückwärtstrainings auf entsprechenden Netzwerkpfaden unter Verwendung des erzielten Verlustwertes, basierend auf einem Rückwärtspropagierungsalgorithmus, wodurch der Gradient des Haupt-Backbone-Netzwerks auf jedem Netzwerkpfad, der Gradient des Zweig-Backbone-Netzwerks auf jedem Netzwerkpfad und der Gradient des Head-Netzwerkes auf jedem Netzwerkpfad erzielt werden.

6. Verfahren nach einem der Ansprüche 3 bis 5, wobei das Aktualisieren von Parametern des entsprechenden Modells, basierend auf dem Gradienten des Haupt-Backbone-Netzwerks auf jedem Netzwerkpfad, dem Gradienten des Zweig-Backbone-Netzwerks auf jedem Netzwerkpfad und dem Gradienten des Head-Netzwerks auf jedem Netzwerkpfad Folgendes umfasst:
Überlagern von Gradienten des Haupt-Backbone-Netzwerks auf alle Netzwerkpfade, wodurch ein überlagerter Gradient des Haupt-Backbone-Netzwerks erzielt wird, und Überlagern von Gradienten jedes Zweig-Backbone-Netzwerks auf alle Netzwerkpfade, die dem Zweig-Backbone-Netzwerk entsprechen, wodurch ein überlagerter Gradient jedes Zweig-Backbone-Netzwerks erzielt wird, und
Aktualisieren von Parametern des Haupt-Backbone-Netzwerks, basierend auf dem überlagerten Gradienten des Haupt-Backbone-Netzwerks, Aktualisieren von Parametern jedes Haupt-Backbone-Netzwerks, basierend auf dem überlagerten Gradienten jedes Zweig-Backbone-Netzwerks, und Aktualisieren von Parametern jedes Head-Netzwerks, basierend auf dem Gradienten des Head-Netzwerks auf jedem Netzwerkpfad.

7. Verfahren nach einem der Ansprüche 1 bis 6, wobei das Auswählen von Trainingsbildern von Verkehrsszenarien, die einer nicht leeren echten Teilmenge von Aufgaben in jeder Aufgabengruppe entsprechen, um die erste Trainingsstufe an dem vorgefertigten Modell durchzuführen, wodurch ein anfängliches trainiertes Modell erzielt wird, Folgendes umfasst:
Durchführen einer ersten Trainingsstufe an dem vorgefertigten Modell unter Verwendung eines Trainingsbildes von Verkehrsszenarien, das einer Aufgabe mit einem maximalen Volumen an Daten in jeder Aufgabengruppe entspricht, wodurch das anfängliche trainierte Modell erzielt wird.

8. Vorrichtung zur Multitask-Zielerkennung, mindestens einen Prozessor und einen Speicher umfassend, der dafür eingerichtet ist, mehrere Programmcodes zu speichern, wobei die Programmcodes dafür eingerichtet sind, von dem mindestens einen Prozessor geladen und ausgeführt zu werden, um ein Verfahren zur Multitask-Zielerkennung nach einem der Ansprüche 1 bis 7 durchzuführen.

9. System zum autonomen Fahren, eine Vorrichtung zur Multitask-Zielerkennung nach Anspruch 8 umfassend.

10. Nicht-flüchtiges computerlesbares Speichermedium, in dem mehrere Programmcodes gespeichert sind, die bei Ausführung durch mindestens einen Prozessor den mindestens einen Prozessor veranlassen, ein Verfahren zur Multitask-Zielerkennung nach einem der Ansprüche 1 bis 7 durchzuführen.

## Revendications

1. Procédé mis en œuvre par ordinateur pour la détection multitâche de cibles, comportant les étapes consistant à :
obtenir une image de détection qui représente au moins un objet de détection de cible (101) ; et
introduire l'image de détection dans un modèle de détection multitâche de cibles entraîné sur la base d'une méthode pas à pas, et détecter et identifier l'objet de détection de cible (102),
le modèle de détection multitâche de cibles étant obtenu par un entraînement pas à pas d'un modèle préconstruit ; le modèle préconstruit comportant un réseau dorsal principal partagé entre une pluralité de tâches, une pluralité de réseaux dorsaux subsidiaires respectivement utilisés pour chacun d'une pluralité de groupes de tâches, et une pluralité de réseaux de tête respectivement utilisés pour chaque tâche ; et
l'entraînement pas à pas du modèle préconstruit comportant les étapes consistant à :
effectuer un entraînement de premier stade sur le modèle préconstruit en utilisant des images d'apprentissage de scénario de trafic correspondant à un sous-ensemble propre non vide de tâches dans chaque groupe de tâches, obtenant ainsi un modèle entraîné initial (301) ;
figer des paramètres du réseau dorsal principal dans le modèle entraîné initial, et effectuer un entraînement de deuxième stade sur le modèle entraîné initial en utilisant des images d'apprentissage de scénario de trafic correspondant à toutes les tâches dans chaque groupe de tâches, obtenant ainsi un modèle entraîné intermédiaire (302) ; et
défiger des paramètres du réseau dorsal principal dans le modèle entraîné intermédiaire, et effectuer un entraînement de troisième stade sur le modèle entraîné intermédiaire en utilisant des images d'apprentissage de scénario de trafic correspondant à toutes les tâches dans tous les groupes de tâches, obtenant ainsi le modèle de détection multitâche de cibles (303) ;
différentes tâches dans chaque groupe de tâches correspondant à différents volumes de données d'images d'apprentissage de scénario de trafic.

2. Procédé selon la revendication 1, la réalisation d'un entraînement de troisième stade sur le modèle entraîné intermédiaire en utilisant des images d'apprentissage de scénario de trafic correspondant à toutes les tâches dans tous les groupes de tâches, obtenant ainsi le modèle de détection multitâche de cibles, comportant les étapes consistant à :
obtenir un taux d'apprentissage pendant l'entraînement de deuxième stade ;
ajuster le taux d'apprentissage pendant l'entraînement de deuxième stade d'après un paramètre prédéfini de réduction de taux d'apprentissage, obtenant ainsi un taux d'apprentissage réduit ; et
effectuer l'entraînement de troisième stade d'après le taux d'apprentissage réduit sur le modèle entraîné intermédiaire en utilisant des images d'apprentissage de scénario de trafic correspondant à toutes les tâches dans tous les groupes de tâches, obtenant ainsi le modèle de détection multitâche de cibles.

3. Procédé selon la revendication 1 ou 2, chacun des réseaux dorsaux subsidiaires étant relié au réseau dorsal principal et au réseau de tête pour chaque tâche dans un groupe de tâches correspondant, formant ainsi une pluralité de trajets de réseau correspondant respectivement à chaque tâche ; et
au moins une action parmi la réalisation de l'entraînement de premier stade, la réalisation de l'entraînement de deuxième stade et la réalisation de l'entraînement de troisième stade comportant les étapes consistant à :
effectuer un apprentissage vers l'avant et un apprentissage vers l'arrière sur des trajets de réseau en utilisant des images d'apprentissage de scénario de trafic correspondant à une pluralité de tâches dans un stade d'entraînement actuel, respectivement, obtenant ainsi un gradient du réseau dorsal principal sur chaque trajet de réseau, un gradient d'un réseau dorsal subsidiaire sur chaque trajet de réseau, et un gradient d'un réseau de tête sur chaque trajet de réseau ; et
mettre à jour des paramètres du modèle correspondant d'après le gradient du réseau dorsal principal sur chaque trajet de réseau, le gradient du réseau dorsal subsidiaire sur chaque trajet de réseau, et le gradient du réseau de tête sur chaque trajet de réseau jusqu'à ce que des conditions de convergence soient satisfaites, puis obtenir le modèle entraîné correspondant.

4. Procédé selon la revendication 3, les conditions de convergence comportant :
l'absence de toute diminution d'une perte de chaque trajet de réseau, et l'absence de toute augmentation de la précision d'un résultat de validation après que le modèle correspondant a été validé en utilisant une image de validation de scénario de trafic.

5. Procédé selon la revendication 3 ou 4, la réalisation d'un apprentissage vers l'avant et d'un apprentissage vers l'arrière sur des trajets de réseau en utilisant des images d'apprentissage de scénario de trafic correspondant à une pluralité de tâches dans un stade d'entraînement actuel, obtenant ainsi un gradient du réseau dorsal principal sur chaque trajet de réseau, un gradient d'un réseau dorsal subsidiaire sur chaque trajet de réseau, et un gradient d'un réseau de tête sur chaque trajet de réseau comportant :
la réalisation, d'après un algorithme de propagation directe, de l'apprentissage vers l'avant sur des trajets de réseau correspondants en utilisant des images d'apprentissage de scénario de trafic correspondant aux tâches dans le stade d'entraînement actuel, obtenant ainsi une valeur de pertes de chaque trajet de réseau ; et
la réalisation, d'après un algorithme de rétropropagation, de l'apprentissage vers l'arrière sur des trajets de réseau correspondants en utilisant la valeur de pertes obtenue, obtenant ainsi le gradient du réseau dorsal principal sur chaque trajet de réseau, le gradient du réseau dorsal subsidiaire sur chaque trajet de réseau, et le gradient du réseau de tête sur chaque trajet de réseau.

6. Procédé selon l'une quelconque des revendications 3 **à 5,** la mise à jour de paramètres du modèle correspondant d'après le gradient du réseau dorsal principal sur chaque trajet de réseau, le gradient du réseau dorsal subsidiaire sur chaque trajet de réseau, et le gradient du réseau de tête sur chaque trajet de réseau comportant les étapes consistant à :
superposer des gradients du réseau dorsal principal sur tous les trajets de réseau, obtenant ainsi un gradient superposé du réseau dorsal principal, et superposer des gradients de chaque réseau dorsal subsidiaire sur tous les trajets de réseau correspondant au réseau dorsal subsidiaire, obtenant ainsi un gradient superposé de chaque réseau dorsal subsidiaire ; et
mettre à jour des paramètres du réseau dorsal principal d'après le gradient superposé du réseau dorsal principal, mettre à jour des paramètres de chaque réseau dorsal principal d'après le gradient superposé de chaque réseau dorsal subsidiaire, et mettre à jour des paramètres de chaque réseau de tête d'après le gradient du réseau de tête sur chaque trajet de réseau.

7. Procédé selon l'une quelconque des revendications 1 à 6, la sélection d'images d'apprentissage de scénario de trafic correspondant à un sous-ensemble propre non vide de tâches dans chaque groupe de tâches pour effectuer un entraînement de premier stade sur le modèle préconstruit, obtenant ainsi un modèle entraîné initial, comportant :
la réalisation d'un entraînement de premier stade sur le modèle préconstruit en utilisant une image d'apprentissage de scénario de trafic correspondant à une tâche présentant un volume de données maximum dans chaque groupe de tâches, obtenant ainsi le modèle entraîné initial.

8. Dispositif de détection multitâche de cibles, comportant au moins un processeur et une mémoire prévue pour conserver une pluralité de codes de programme, les codes de programme étant prévus pour être chargés et exécutés par le ou les processeurs pour réaliser un procédé de détection multitâche de cibles selon l'une quelconque des revendications 1 à 7.

9. Système de conduite autonome, comportant un dispositif de détection multitâche de cibles selon la revendication 8.

10. Support de stockage non transitoire lisible par ordinateur sur lequel est stockée une pluralité de codes de programme qui, lorsqu'ils sont exécutés par au moins un processeur, amènent le ou les processeurs à réaliser un procédé de détection multitâche de cibles selon l'une quelconque des revendications 1 à 7.
